# EUROPÄISCHE PATENTANMELDUNG

(11) **EP 0 537 595 A2**
(43) Veröffentlichungstag der Anmeldung: **21.04.1993**
(21) Anmeldenummer: 92117025.4
(22) Anmeldetag: 06.10.1992
(51) Int. Cl.: C02F 11/04, C02F 11/14, C02F 1/36, C02F 11/12

(54) **Verfahren zum Abbau von in Klärschlamm enthaltenen organischen Verbindungen**

(30) Priorität: 07.10.1991 DE 4133210
(71) Anmelder: ALLIED COLLOIDS GmbH, D-22419 Hamburg (DE)
(72) Erfinder: Heydrich, Klaus, W-6384 Schmitten 6 (DE)
(74) Vertreter: Vogeser, Werner, Dipl.-Ing.

(57) **Zusammenfassung**

Ein Verfahren zum Abbau von in Klärschlamm enthaltenen organischen Verbindungen wird beschrieben, bei dem ein gegebenenfalls vorbehandelter Klärschlamm physikalisch behandelt wird und der gegebenenfalls vorbehandelte Klärschlamm mit anorganischen und/oder organischen Verbindungen umgesetzt wird. Spezifische physikalische Behandlungsmethoden sowie spezifische chemische Verbindungen werden ebenfalls beschrieben, die makromolekulare Verbindungen in niedermolekulare Bestandteile bis zur Veratmung in Kohlendioxid und Methan umwandeln. Dieses Verfahren wird in einem Faulturm (1) ausgeführt, der mit einem Rührer (2) sowie einer Heizeinrichtung (3) versehen ist. In die Klärschlammzuführleitung (4) ist eine Schnellrühr- und/oder Ultraschalleinrichtung (5) eingebracht, Enzyme werden über eine Zuführleitung (7), Säuren über die Säurezuführleitung (8) eingeleitet. Ferner sind eine Durchflußmeßeinrichtung (10), eine Schaumschneiderfalle (14), Ablaßpfeifen (16), eine Gasablaßöffnung (18) und eine Zuführleitung (20) für Alkali-, Erdalkali- und Ammoniumverbindungen vorgesehen.

## Beschreibung

Die Erfindung betrifft ein Verfahren zum Abbau von in Klärschlamm enthaltenen organischen Verbindungen gemäß dem Oberbegriff des Patentanspruchs 1.

Klärschlämme entstehen durch die Aufbereitung kommunaler und/oder industrieller Abwässer, welche in den mechanischen, biologischen und chemischen Klärstufen einer Kläranlage mit einem hohen Wasseranteil und einem sehr hohen OTS-Anteil flüssig anfallen.

Zur Beseitigung dieser dünnflüssigen Klärschlämme werden diese, gegebenenfalls nach einer chemischen Konditionierungsstufe, maschinell entwässert und mit Zuschlagstoffen, wie Kalk, Zementstaub, Asche und ähnlichem Verbindungen verfestigt, deponiert oder thermisch bei hohen Temperaturen getrocknet, verascht oder landwirtschaftlich verwertet. Ein Nachteil der so behandelten Klärschlämme ist, daß wegen der hohen Energiekosten und der erforderlichen Investitionen für die Verbrennungsanlage und dabei entstehenden, zum Teil hochgiftigen Abgasen sowie der möglichen Auswaschung von Giftstoffen aus den so behandelten Klärschlämmen, die Deponierung dieser Klärschlämme noch mit ziemlichen Unabwägbarkeiten verbunden ist.

Bekannt ist auch, daß ein Klärschlamm mit in der Regel einem Gehalt an 5% Tockensubstanz (TS) der Faulung unterworfen werden kann, wobei sich diese TS aus 2/3 organischer TS (OTS) und etwa 1/3 anorganischer TS zusammensetzt. Dieser Klärschlamm wird in der Regel in einem Faulbehälter über einen Zeitraum von ca. 20 Tagen bei einer Temperatur von ca. 33°C unter Einsatz einer Umwälzvorrichtung behandelt, wobei es zu einem Abbau der organischen Inhaltsstoffe kommt.

Der Nachteil des bekannten Standes der Technik ist jedoch dabei, daß ein maximaler Glühverlust, d.h. ein Massenanteil, der nach dem Glühen der Trockensubstanzen als Mineralrückstand verbleibt, in der Regel den Wert von 40% nicht unterschreitet.

Bekannt ist auch, daß die Klärschlämme in der Regel Proteine mit einer Helixstruktur enthalten, wobei durch Hydrolyse und Versäuerung und einer sich daran anschließenden acetogenen Phase sowie in einer methanogenen Phase diese Proteine in Faulbehältern in der Regel in niedermolekulare Bestandteile umgesetzt werden, wobei letztendlich Methan und Kohlendioxid entstehen. Dieser Prozeß kommt jedoch relativ bald zum Erliegen, da die vorhandenen proteinogenen Inhaltsstoffe des Klärschlammes aufgrund ihrer makromolekularen Struktur nur sehr schwer bis überhaupt nicht angreifbar sind und daher nicht in niedermolekulare Kohlenstoffverbindungen überführt werden können.

Aufgabe der Erfindung ist es daher, ein Verfahren bereitzustellen, bei dem durch Optimierung des anaeroben Faulprozeßes organische Verbindungen weitgehend abgebaut werden können und die gebildete Gasausbeute, insbesondere die Methangas-Ausbeute, erhöht werden kann.

Erfindungsgemäß wird diese Aufgabe durch die Merkmale des Patentanspruchs 1 gelöst, indem a) der gegebenenfalls vorbehandelte Klärschlämm physikalisch behandelt und b) der gegebenenfalls vorbehandelte Klärschlamm mittels anorganischer und/oder organischer Verbindungen umgesetzt wird, wobei in der Regel der Schritt b) im Anschluß an den Schritt a) und dieser zweistufige Prozeß in einem Faulturm ausgeführt werden kann.

Erfindungsgemäß ist jedoch auch die umgekehrte Reihenfolge vorgesehen, d.h. die Umsetzung des Klärschlammes mit chemischen Substanzen erfolgt vor der physikalischen Behandlung.

Gemäß einer weiteren Ausführungsform der Erfindung kann Hydrolyse und Versäuerung des Klärschlammes in einem ersten Verfahrensschritt und daran sich anschließende acetogene Phase in einem ersten Faulraum erfolgen, an den sich als zweiter Verfahrensschritt die methanogene Phase in einem zweiten Faulraum anschließt. Im ersten Verfahrensschritt wird dabei, in der Regel über einen Zeitraum von 1 bis 4 Tagen, frischer Klärschlamm bei einem gepufferten pH-Wert von ca. 6 hydrolysiert, versäuert und anschließend der so behandelte Klärschlamm nach der erfindungsgemäßen Verfahrensweise im zweiten Verfahrensschritt über einen Zeitraum von 10 bis 30 Tagen, insbesondere einem Zeitraum von 18 bis 24 Tagen, in Methan, Kohlendioxid, Wasser sowie Kohlenstoff-reduziertem Klärschlamm übergeführt.

Erfindungsgemäß ist auch vorgesehen, den Klärschlamm bis zu einem TS-Gehalt von maximal 14 % einzudicken, wobei weniger Schlammvolumen bearbeitet werden muß und es so zu einer Energieeinsparung kommt, zugleich aber auch eine Verlängerung der Faulzeit eintritt. Für das Eindicken sind dabei alle gängigen Eindickungsmaßnahmen geeignet, z.B. mechanische Entwässerung, thermische Behandlung durch Verdampfung überschüssigen Wassers oder Zentrifugation oder Filtration. Dieses Eindicken kann dabei sowohl vor der Einleitung des Klärschlammes in das System erfolgen, als auch nach Rückführung abgelassenen, bereits einmal die Faulung durchlaufenen Schlammes. Diese Rückführung des Schlammes soll dabei im wesentlichen ohne zu starke Abkühlung erfolgen, so daß der erneute Faulprozeß, gegebenenfalls nach Zufuhr von weiterem frischen Klärschlamm, ohne temperaturabkühlungs-bedingte Zeitverzögerung ablaufen kann, wobei diese Rückführung dem Abbau desjenigen organischen Materials dient, das dem Enzymangriff noch nicht oder nicht zugänglich gewesen ist.

Mit der erfindungsgemäßen Verfahrensweise kommt es dabei nicht nur zu einer Verminderung der Klärschlamminhaltstoffe und eines Kohlenstoffabbaus, um möglichst wenig Kohlenstoff auf die Deponie ablagern zu müssen, sondern auch zu einer Erhöhung der Gasausbeute an gebildetem Methan, wobei in der Regel die ca. zweifache Menge an Methan gewonnen wird, die zur Energiegewinnung bzw. Trocknung und/oder Verbrennung und für die Kreislaufführung des Prozeßes Verwendung findet.

Gleichzeitig hat das erfindungsgemäße Verfahren den Vorteil, daß es, entsprechend der neueren Gesetzgebung, weitestgehend zu einer Reduzierung der deponiefähigen bzw. deponiebaren Klärschlammengen und Reduzierung des Kohlenstoffgehaltes dieser Klärschlämme kommt.

Gemäß der Erfindung kann das Verfahren sowohl kontinuierlich und/oder diskontinuierlich durchgeführt werden, wobei der in den Faulturm einzuleitende Klärschlamm wahlweise einer Behandlung mit schnell laufenden Rührern oder einer Ultraschallbehandlung unterworfen wird. Erfindungsgemäß ist anstelle einer Schnellaufrührer- oder Ultraschallbehandlung auch der Einsatz von Mikrowelle oder eine Feinschlammmahlung mittels Rohr- oder Kugelmühlen vorgesehen.

Als für die Erfindung geeignet haben sich dabei schnell laufende Rührer, z. B. Ultra-Turrax^{R}-Rührer einer Umdrehungsgeschwindigkeit von 20 000 bis 30 000 Umdrehungen pro min (Upm) gezeigt, die zum Dispergieren, Emulgieren, Suspendieren und Homogenisieren fließfähiger Medien auch im Tonnengewichtsbereich geeignet sind. Die dabei erzielbaren Umdrehungen und/oder Frequenzen sind dabei vom unteren Schallbereich bis zum Ultraschall einstellbar und können dem zu bearbeitenden Stoff oder Stoffgemisch angepaßt werden. Neben der durch Ultra-Turrax^{R} bis zum Ultraschall einstellbaren Umdrehungsgeschwindigkeit ist es erfindungsgemäß möglich, Ultraschall für sich alleine zur physikalischen Vorbehandlung des wäßrigen Klärschlammes einzusetzen.

Aufgrund der durch Ultraschall hervorgerufenen sehr raschen mechanischen Erschütterung auf im Wasser befindliche Zellen von Kleinlebewesen, wie Bakterien, Algen, sowie auch in diesen Zellen vorliegenden Proteinen, aber auch von diesen Zellen freigesetzten und/oder frei vorliegenden Proteinen, Fettsäuren, Fetten, Kohlenhydraten, Polysacchariden und dergleichen führt die Ultraschallbehandlung zur Zerstörung dieser Zellen oder zu einer Denaturierung der entsprechenden Substanzen, so daß es z.B. zu einer Denaturierung der proteineigenen Helixstruktur kommt, die dem weiteren Angriff erfindungsgemäß eingesetzter Verbindungen förderlich ist.

In der Regel kann die so durchgeführte physikalische Vorbehandlung in Verbindung mit einer leichten Erhöhung von außen zugeführter Energie und einer damit erhöhten Temperatur durchgeführt werden. Diese von außen zugeführte Temperaturerhöhung ist jedoch nicht unbedingt notwendig, da verfahrensbedingt durch die Ultra-Turrax^{R} und/oder Ultraschalleinwirkung in der Regel eine verfahrensbedingte Eigenwärme entsteht, die der weiteren Bearbeitung des Klärschlammes förderlich ist.

An die physikalische Vorbehandlung des in der Regel unbehandelten Klärschlamms schließt sich eine chemische Umsetzung des vorbehandelten Klärschlammes an. In Abhängigkeit von dem beabsichtigten Verfahrensablauf wie er bereits vorstehend beschrieben ist, d.h. physikalische Vorbehandlung mit nachgeschalteter chemischer Umsetzung oder umgekehrt sowie Vorschaltung eines Versäuerungs- und Hydrolyseschrittes, kann diese chemische Umsetzung selbstverständlich an anderer Stelle des erfindungsgemäßen Verfahrens erfolgen. Dabei ist zu berücksichtigen, daß erfindungsgemäß selbstverständlich mechanisch vorentwässerter bzw. biologisch aufgearbeiteter Klärschlamm der physikalischen Behandlung mittels hochdrehender Rührer und/oder Ultraschallbehandlung vorgeschaltet sein kann, wobei diese Entwässerung bis zu maximal 14 % TS erfolgen kann.

Bei der erfindungsgemäßen chemischen Umsetzung wird in der Regel der gegebenenfalls physikalisch oder andersweitig vorbehandelte Klärschlamm zur Förderung des Abbauprozeßes mit denaturierenden Agentien, Enzymen, Säuren und/oder salzbildenden Verbindungen umgesetzt. Dabei werden bei z.B. nicht ausreichender Fällung von Phosphat im aerob betriebenen Teil einer Kläranlage im Hinblick auf die Phosphatausscheidung spezifische Phosphatsalze bildende Verbindungen im Faulbehälter zugesetzt.

Da es zur Vermeidung von hohen kohlenstoffhaltigen Rückständen der Klärschlammaufbereitung notwendig ist, die in den Klärschlämmen enthaltene organische Trockensubstanz (OTS) im wesentlichen in niedermolekulare Bestandteile überzuführen, hat es sich erfindungsgemäß als vorteilhaft herausgestellt, die Denaturierung der Proteine und/oder proteinogenen Substanzen mittels chemischer und/oder physikalischer Einwirkungen zu beeinflussen. Vorteilhafte physikalische Einwirkungen sind dabei zugleich die bereits vorstehend genannten Ultraschall- und/oder Ultra-Turrax^{R}-Behandlungen, wobei in diesem Fall die Ultraschallbehandlung eine sogenannte milde Ultraschallbestrahlung bei etwa 1 bis 5 MHz und 3 bis 6 W/cm² handelt, die keine Strukturen zerstören, sondern lediglich die Wirksamkeit der zugegebenen Enzyme, Bakterien, etc. erhöhen soll.

Aber auch eine Temperaturbehandlung bis zu ca. 60°C hat sich als erfolgversprechend gezeigt.

Als für die Erfindung geeignete chemische denaturierende Agentien haben sich Agentien gezeigt, die die Polypeptidkette der in dem Klärschlamm enthaltenen Proteine aus der Helixstruktur in eine im wesentlichen geradlinige bzw. geradkettige Struktur umwandeln, um somit die weitere Umsetzung dieser in die Primär- bzw. Sekundärstruktur überführten Proteine bzw. proteinogenen Substanzen zu unterstützen. Im Prinzip sind dabei alle die Denaturierung von Proteinen und/oder proteinogenen Substanzen beeinflussenden denaturierenden Agentien geeignet, wie Harnstoff oder denaturierend wirkende Tenside, jedoch hat es sich erfindungsgemäß gezeigt, daß Laurylverbindungen, wie Natriumdodecylsulfat (SDS), Kaliumdodecylsulfat oder dergleichen, in Verbindung mit der durch die Ultraschall- bzw. Ultra-Turrax^{R}- oder Mahlbehandlung hervorgerufene verfahrensbedingte Eigenwärme zur Denaturierung dieser Proteine bzw. proteinogenen Substanzen am geeignetsten erscheinen. Mit dem erfindungsgemäßen Einsatz dieser Denaturierungsagentien ist es möglich, auch die in Klärschlämmen eines sehr hohen Wassergehalts enthaltenen organischen Verbindungen, wie sie normalerweise in kommunalen und/oder industriellen Klärschlämmen anfallen, dem Zugriff weiterer chemischer Agentien zum Abbau der OTS zugänglich zu machen.

Zur Förderung der Denaturierungswirkung der Laurylverbindungen können überdies Säuren eingesetzt werden, wobei aufgrund des stark herabgesetzten pH-Wertes es zu einer Entknäuelung bzw. Entspiralisierung der Quartär- bzw. Tertiärstruktur in die Primärstruktur der Proteine bzw. proteinogenen Substanzen kommt, die dem Zugriff einer Vielzahl von proteinspaltenden chemischen Verbindungen zugänglich sind. Auch der Abbau der Polysaccharide wird durch den erfindungsgemäßen Einsatz von Säuren gefördert. Als Säuren sind dabei im wesentlichen alle Mineralsäuren wie Schwefelsäure, Salzsäure, Salpetersäure oder dergleichen sowie Monocarbonsäuren mit 1 bis 3 C-Atomen, insbesondere Ameisensäure und Essigsäure, geeignet.

Erfindungsgemäß kann der mittels denaturierend wirkender Tenside wie SDS kontinuierlich und/oder diskontinuierlich vorbehandelte Klärschlamm weiter Temperaturen bis zu einem Temperaturoptimum von 33 bis 37°C und einem pH-Wert-Optimum von ca. 6,0 bis 8,0 ausgesetzt werden, wobei diese Temperatureinwirkung in der Regel nur wenige Stunden umfaßt.

Erfindungsgemäß hat es sich dabei als vorteilhaft erwiesen, daß die vorstehend genannten vorbereitenden Maßnahmen vor Zugabe der die Fette und/oder Fettsäuren, proteolytischen oder Kohlenhydrat spaltenden Enzyme durchgeführt werden, jedoch kann erfindungsgemäß auch bereits eine Preinkubation vor der physikalischen und/oder chemischen denaturierenden Behandlung erfolgen, da Proteine, insbesondere die aus der Tertiär- bzw. Quartärstruktur räumlich vorstehenden Peptid-Seitenketten dem Angriff von solchen Enzymen auch bereits im nativen Zustand zugänglich sind.

Gemäß einer Ausführungsform der Erfindung werden dem auf die vorstehend beschriebene Weise behandelten Klärschlamm hydrolytische Enzyme und/oder hydrolytische Enzyme produzierende selektierte Bakterien zugesetzt, wobei diese Bakterien gefriergetrocknet und/oder direkt aus Fermentern gewonnen eingesetzt werden können. Die Zugabe der hydrolytischen Enzyme, die dem Klärschlamm als Trockenprodukte, Lösungen und/oder Suspension selektiv zugesetzt werden, führt dabei zur Spaltung der vollständig bzw. teilweise denaturierten makromolekularen Verbindungen, wie z.B. Proteine, oder makromolekularer Kohlenwasserstoffe und Polysaccharide sowie anderer organischer Komponenten in dem Klärschlamm, die den Proteinstoffwechsel beeinflussen, so daß ein Abbau polymerer Kohlenstoffverbindungen in niedere Verbindungen geringerer Kohlenstoffzahl bis hin zur Veratmung in Kohlendioxid, Wasser und Methan erfolgen kann. Von Vorteil ist dabei der Einsatz der Enzyme als Lösung und/oder Suspension, da somit eine zu starke Agglomeration der enzymatischen Lösungen vermieden wird.

Erfindungsgemäß können die handelsüblich erhältlichen Enzyme und/oder Enzymgemische in reiner Form oder in technischer Form eingesetzt werden. Aus Kostengründen werden Enzyme und Enzymgemische technischer Grade bevorzugt.

Für die Zwecke der Erfindung hat es sich dabei als geeignet gezeigt, Mischungen aus Amylasen, Lipasen, Cellulasen, Proteasen, Carbohydrasen, Carboanhydrasen und/oder Glycoproteinasen in Mengenverhältnissen von 1:10.000, insbesondere von 1:5.000 bezogen auf OTS, sowie einer Aktivität von 100%, bezogen auf den Einzelstoff, einzusetzen, wobei die Aktivität der Einzelkomponenten der handelsüblich erhältlichen Enzyme und/oder des Enzymgemisches wegen der im wesentlichen gleichen Zusammensetzung nur geringen Schwankungen unterliegt. Mit dem Einsatz der erfindungsgemäßen Enzyme, Enzyme produzierenden selektierten Bakterien und/oder Mischungen davon ist aufgrund der vorhergehend durchgeführten möglichen Vorbehandlungen ein relativ schneller Start der Umsetzung sowie auch ein schneller Abbau der in dem Klärschlamm enthaltenen organischen Substanzen möglich.

Je nach dem im anfallenden Klärschlamm enthaltenen organischen Substanzen sind dabei Kombinationen von Enzymen und/oder Enzymgemischen mit spezifischen Enzymen produzierenden selektierten Bakterien möglich.

Gemäß der Erfindung hat es sich gezeigt, daß nach Zugabe der vorstehend genannten Enzyme bzw. Enzymgemische eine kurze Nachbehandlung mittels mildem Ultraschall und/oder Mikrowellen die vorstehend genannten Enzyme aktivieren kann, wobei die eingesetzte Energie geringer ist als die bei der physikalischen Behandlung.

Zur weiteren Steigerung des Abbaus organischer Verbindungen und damit einer Reduzierung des Kohlenstoffgehaltes auf einen Wert von bis zu maximal 10% Glühverlust, insbesondere einem Glühverlust von 10 bis 20 %, hat es sich erfindungsgemäß gezeigt, daß dem so vorbehandelten Klärschlamm Aminosäuren und/oder deren Derivate, insbesondere bei toxischen Inhaltsstoffen im Klärschlamm, zugesetzt werden können.

Als für die Erfindung besonders vorteilhaft gezeigt haben sich dabei die Aminosäurederivate der Glutaminsäure, wie die Folsäure, von der bekannt ist, daß sie eine bakteriostatische Wirkung ausübt. Diese Zugabe der Folsäure in den Faulprozeß soll dabei spät erfolgen, d.h. als letztes Additiv. Handelsüblich erhältliche Zubereitungen aus stabilisiertem Vitamin B und Nährstoffen (Desfolat^{R}) bewirken dabei einen vermehrten BSB/CSB-Abbau, verbessertes Absetzverhalten, eine antitoxische Wirkung und eine Verringerung der Schaumbildung, wobei diese Substanzen in Mengen von ca. 1 bis 1.000 ppm, insbesondere 10 bis 250 ppm, in dem zu behandelnden Klärschlamm eingesetzt werden.

Um zu vermeiden, daß das während des erfindungsgemäßen Verfahrens gebildete Ammoniak in zu hohen Konzentrationen aus den organischen Stickstoff enthaltenden Verbindungen einen toxischen Einfluß auf die erfindungsgemäß eingesetzten Enzyme ausübt, muß Vorsorge getroffen werden, daß das erfindungsgemäß gebildete Ammoniak in zumindest geringen Mengen als Ammoniumhydrogencarbonat unschädlich gemacht wird. Dies ist bereits dadurch gegeben, daß bei der erfindungsgemäßen Verfahrensweise ein Teil des gebildeten Kohlendioxids als HCO₃⁻ und ein Teil des gebildeten Ammoniaks als NH₄⁺ in wäßriger Lösung vorliegt, so daß in geringen Mengen bereits Ammoniumhydrogencarbonat gebildet wird, das den enzymatischen Prozeß beeinflussendes Ammoniak dem weiteren Verfahren und damit dem Abbau der OTS entzieht. Aufgrund des jedoch vorliegenden Ammoniaküberschusses können und sollen weitere, erfindungsgemäße Vorsorgungen getroffen werden.

Zu berücksichtigen ist dabei, daß zwar der Phosphatgehalt des Kläranlagenauslaufs durch Fällung in der Regel beseitigt wird und im Klärschlamm unlöslich vorliegt, biologisch und/oder chemisch ausgefälltes Phosphat jedoch wieder gelöst wird.

Um den Phosphatgehalt der Klärschlämme zu verringern, kann und muß daher das in wäßriger Lösung vorliegende Phosphat an Aktiverde adsorbiert werden. Vor allem aber kann man auch über die Fällung mit Erdalkalisalzen wie Ca- und Mg-Salzen, die zugleich stabilisierend für die Enzyme und die enzymatischen Prozesse sind, hinaus, die Fällung mittels Eisen- oder Aluminiumsalzen oder Kalk verbessern. Zur Verhinderung und zur Verringerung der toxischen Schwefelwasserstoffbildung kann zusätzlich ein Eisensalzüberschuß eingesetzt werden, der das Schwefelion als Eisensulfid ausfällt. Zugleich müssen jedoch Vorsorgungen getroffen werden, daß für die Aufrechterhaltung einer ausreichenden Enzymaktivität nicht zu viele toxische Eisenionen zugeführt werden. Aus diesem Grund wird vorteilhafterweise Eisensalz unterdosiert zugegeben und vermehrt Kalk zur Fällung.

Erfindungsgemäß hat es sich dabei gezeigt, daß zur Vermeidung einer Ammoniakvergiftung der eingesetzten Enzyme und zugleich einer Verringerung der Phosphatgehalte in dem aus der Klärschlammfaulung ausgeleiteten Klärwasser, dem Klärschlamm salzbildende Verbindungen, insbesondere anionische Gruppen bindende Verbindungen zur Ausfällung dieser Anionen zugesetzt werden. Als bei dem erfindungsgemäßen Verfahren anfallende Ionen seien dabei beispielhaft Phosphate, Sulfate, Sulfite und/oder Sulfide genannt. Aufgrund des sich verfahrensbedingt einstellenden, im wesentlichen neutralen pH-Wertes von ca. 7 haben sich gut lösliche Alkali- und/oder Erdalkaliverbindungen des Magnesiums, Calciums, Bariums und/oder Ammoniumverbindungen als für die erfindungsgemäße Verfahrensweise geeignete Verbindungen zur Ausfällung der Phosphate, Sulfate oder Sulfide gezeigt. Da jedoch, wie vorstehend ausgeführt, der Gehalt insbesondere an Phosphat drastisch verringert werden muß, sind insbesondere die als wasserunlösliche Verbindungen ausfallenden Erdalkaliphosphate für die erfindungsgemäße Verfahrensweise von Vorteil. Aufgrund des bereits im Verfahren gebildeten und zum großen Teil als Ammoniumion im wäßrigen System vorliegenden Ammoniakes bilden sich daher besonders leicht Magnesiumammoniumphosphate, die bei dem bestehenden bzw. sich verfahrensbedingt einstellenden schwach alkalischen pH-Wert ausfallen und somit nicht mehr bei der Schlammentwässerung ausgeschieden werden müssen.

Überdies weist das erfindungsgemäße Verfahren den Vorteil auf, daß aufgrund des Glühverlustes bis zu einem Wert von ca. 10% der Gehalt an gebildetem Gas, in der Regel Kohlendioxid und Methan in einem Verhältnis von ca. 1 : 2 , hoch ist, wobei diese Mischung sich als Energieträger für den Betrieb von z.B. Gasmaschinen, Wärmemaschinen, Druckluftgewinnung und/oder auch zur Kreislaufführung und weiteren Verbrennung und/oder Trocknung der organischen Trockensubstanz geeignet gezeigt hat, wobei in der Regel die Trocknung der Verbrennung vorgeschaltet ist. Nach entsprechender Reinigung ist überdies eine Einspeisung in das Stadtgasnetz sowie, ohne vorherige Reinigung, eine Verstromung und Einspeisung in das Netz der Energieversorgungsunternehmen möglich.

Die Effizienz des Verfahrens kann zusätzlich dadurch gesteigert werden, daß beim mechanischen Entwässern des gefaulten Schlammes zusätzlich eine möglichst weitgehende Trennung der festen Bestandteile in die organischen und die anorganischen Bestandteile erfolgt.

Zu diesem Zweck wird vorzugsweise ein sog. 3-Phasen-Dekanter eingesetzt, wie er bisher für die Trennung von Oel/Wasser/Feststoffgemischen eingesetzt wurde.

Bei einem solchen 3-Phasen-Dekanter handelt es sich eine in der Regel waagerecht liegende, sehr schnell rotierende Trommel, die auf ihrer Einlaßseite eine mittige Zufuhröffnung für das zu trennende Gemisch aufweist, und sich zur Auslaßseite hin konisch verjüngt. Zwischen der Einlaß- und der Auslaßseite ist eine sogenannte Stauscheibe stillstehend angeordnet, die einerseits einen schmalen Umfangsspalt zum umgebenden Trommelgehäuse aufweist und andererseits auf unterschiedlichen Radien angeordnete axiale Durchlässe, die mittels radial verstellbarer Abdeckungen der sogenannten Wehre, ganz oder teilweise verschließbar sind. Im verjüngenden Auslaßbereich rotiert weiterhin auf der Symmetrieachse des Gerätes eine Schnecke, und fördert das vom Einlaßbereich durch die Stauscheibe hindurch getretene gut zu In einer der Stirnseiten sind auf unterschiedlichen Radien axiale Durchlässe angeordnet , die mittels radial verstellbarer Abdeckungen, der sogenannten Wehre, ganz oder teilweise ab einem variablem Durchmesser verschließbar sind.

Denn durch die schnelle Rotation des Rotors wird das zu trennende Gemisch einer mindestens 4000fachen Erdbeschleunigung unterworfen, wodurch sich die schwersten Bestandteile auf den Innenumfang des Trommelgehäuses die mittelschweren und leichten Bestandteile jeweils weiter innen anliegend zu einem Ringkörper anordnen.

Während die schwere Phase ggfs. durch das Überwinden der Stauscheibe über den Umfangsspalt und die Austragsschnecke in den Auslaßbereich gelangen, werden die mittlere und leichte Phase über die entsprechend angeordneten wenigstens 2 Wehre in der einlaßseitigen Stirnfläche abgezogen.

Mit einer derartigen Anordnung lassen sich jedoch nicht nur mit schweren Feststoffen versetzte Oel/Wasser-Gemische trennen, sondern auch Klärschlämme, deren feste Bestandteile sowohl organischer als auch anorganischer Natur sind. Denn in der Regel sind die anorganischen Feststoffe schwerer als die organischen, und bilden damit die schwere Phase des 3-Phasen-Dekanters. Da die Feststoffe insgesamt leichter sind als der wässrige Bestandteil, bildet das Wasser die leichte Phase.

Dadurch ist es möglich, aus dem 3-Phasen-Dekanter eine schwere Phase abzuscheiden, die eine dickflüssige Konsistenz von möglichst über 40 Gew.-% Trockenmasse aufweisen soll und einen sehr niedrigen, in der Regel unter 10 %igen Anteil an organischen Bestandteilen besitzt.

Diese anorganische Fraktion kann ohne Probleme auf Deponien abgelagert werden, da einerseits ihr organischer Gehalt so gering ist, daß keine nennenswerte Methan-Ausgasung mehr zu befürchten steht und andererseits die Konsistenz ausreichend fest ist, um die geforderte Scherbeständigkeit für die Deponieablagerung zu erfüllen.

Auch die entnommene leichte Fraktion, das Restwasser, ist ausreichend von Feststoffen gereinigt, um dieses Restwasser direkt dem Auslauf der Kläranlage zuzuführen.

Damit verbleibt als mittlere Fraktion ein dickflüssiger Restschlamm, der 5 bis 15 % Trockenmasse aufweist und in hohem Maße aus organischen Bestandteilen besteht. Im Vergleich zur ursprünglich angefallenen Menge des gefaulten Schlammes ist diese Restmenge vergleichsweise gering und kann mit entsprechend geringem Aufwand leicht weiterbehandelt werden. Diese Weiterbehandlung kann entweder in dem Einbringen und Weiterbehandeln einem zweiten, separatem Faulraum bestehen, in dem spezielle Bedingungen zur Nachbehandlung dieser, bei einer ersten Faulbehandlung nicht umgesetzten, organischen Bestandteile geschaffen werden oder diese organische Fraktion wird im Kreis in den bereits einmal durhlaufenden Faulraum zur erneuten Behandlung zurückgeführt.

Dabei sollte unbedingt die am Einlauf dieses Faulraumes vorhandene physikalische Behandlung des Eingabe-Schlammes ebenfalls wieder mitdurchlaufen werden, eventuell kann direkt in der Durchführleitung diese organische Fraktion einer speziellen, sehr energiereichen Ultraschall-Bestrahlung einer anderen physikalischen Behandlung unterworfen werden, was angesichts der zu behandelnden geringeren Mengen bei weitem keine so hohen Kosten verursacht, wie die Behandlung der gesamten anfallenden Schlamm-Menge mit solchen Methoden.

Dabei kann - um das Trennungsergebnis des 3-Phasen-Dekanters zu verbessern - entweder nach dem ersten Faulraum und vor der Zuführung in den 3-Phasen-Dekanter oder bereits vor der Zuführung des Schlammes in den ersten Faulraum eine Vorbehandlung erfolgen, bei der der zu behandelnde Stoff mit Alkalien oder Erdalkalien, insbesondere mit Kalziumhydroxidt versetzt wird, bis das Gemisch einen pH-Wert von mindestens 12 erreicht hat. Wenn dieses Gemisch anschließend mehrere Stunden oder gar mehrere Tage unter Homogenisierung beispielsweise den kontinuierlichen oder unterbrochenen Einsatz eines Rührers, in einem Zwischenbecken oder ähnlichem verweilen kann, werden dadurch bereits Membrane aufgebrochen oder angebrochen, so daß die spätere physikalische sowie chemische Behandlung wiederum effektiver verläuft.

Vor dem Einbringen in den Faulturm ist dabei eine Neutralisierung auf pH-Werte von 6,0 bis 8,0 notwendig. Diese geschieht mittels Karbonsäuren und zwar vorzugsweise Essigsäure oder Ameisensäure, da beispielsweise Essigsäure überwiegend in Methan umgewandelt wird, was den Anteil des Methans an der Gasausbeute auf 80 bis 90 % verbessert. Essigsäure fällt in ausreichender Reinheit als Abfallprodukt in der Nahrungsmittelindurstrie in größeren Mengen an und ist daher zusätzlich ein preisgünstiges Neutralisationsmittel. Diese Vorbehandlung kann im Prinzip auch durch Aufsäuerung mit Karbonsäuren auf pH-Werte von 2 oder darunter geschehen, wobei notfalls auch Mineralsäuren zusätzlich verwendet werden können.

Ebenso kann der Aufschluß auch mittels Karbonsäuren wie Essigsäure oder Ameisensäure, und - soweit nötig - mittels so wenig wie möglicher Mineralsäuren, erfolgen, mit anschließender Neutralisation mittels Kalk, Natronlauge oder Kalilauge.

Diese Vorbehandlung sollte zumindest für die aus dem 3-Phasen-Dekanter in den Faulraum rückgeführte organische Fraktion, also relativ geringe Mengen, vorgesehen werden, wobei dann eine insgesamt hohe Effizienzsteigerung des Prozesses bei geringem Aufwand erreicht werden kann.

Vor dem Einbringen des Schlammes in den Faulraum sollten ferner Peptone bzw. Peptine in einer Menge von 100 g bis 1000 g zugegeben werden, um dadurch die Gasausbeute und insbesondere die Ausbeute an Methangas weiter zu steigern. Beim Betrieb des 3-Phasen-Dekanters hat es sich insbesondere als vorteilhaft erwiesen, für diesen Anwendungsfall eine Stauscheibe zu verwenden und dadurch den Schlamm zu klassieren, z.B. nach Gewicht oder Teilchengröße.

Die Schnecke wird dabei so schnell abgetrieben, daß zur Rotation der Trommel eine Drehgeschwindigkeitsdifferenz von 2 bis 10 U/min gegeben ist, je nach Anfallmenge der organischen, schweren Fraktion.

Weiterhin ist es vorteilhaft, einerseits vor dem 1. Faulraum und andererseits nach dem 3-Phasen-Dekanter in das System jeweils einen sog. Hotz'schen Topf, einen speziellen Aufstrom-Klassierer, z.B. in einem By-pass einzubauen. Damit kann zusätzlich die Effizienz der Trennwirkung des 3-Phasen-Dekanters kontrolliert und dessen Parameter entsprechend verändert werden.

Somit stellt das erfindungsgemäße Verfahren eine einfache und leicht durchzuführende Verfahrensweise dar, um zum einen organische Verbindungen abzubauen, damit möglichst wenig Kohlenstoff deponiert werden muß, zum anderen zugleich auch die Gasausbeute zu erhöhen, die als Energierohstoff wieder in den Kreislauf zurückgeführt werden kann. Als weiterer Vorteil des erfindungsgemäßen Verfahrens ist weiterhin die Entlastung der maschinellen Entwässerungseinrichtungen zu sehen, da weniger mit TS-versetzter Klärschlamm verarbeitet werden kann.

Die Erfindung wird nachfolgend anhand der Figuren näher erläutert, in denen
Fig. 1 eine schematische Darstellung einer Vorrichtung zur Durchführung des erfindungsgemäßen Verfahrens,
Fig. 2 schematisch den Betrieb einer Kläranlage unter Einsatz der erfindungsgemäßen Verfahrensweise zeigen und
Fig. 3 eine Schemadarstellung ähnlich der Figur 2 mit einem 3-Phasen-Dekanter als Entwässerung möglichst großen Abstand zum oberen Lager zu ermöglichen.

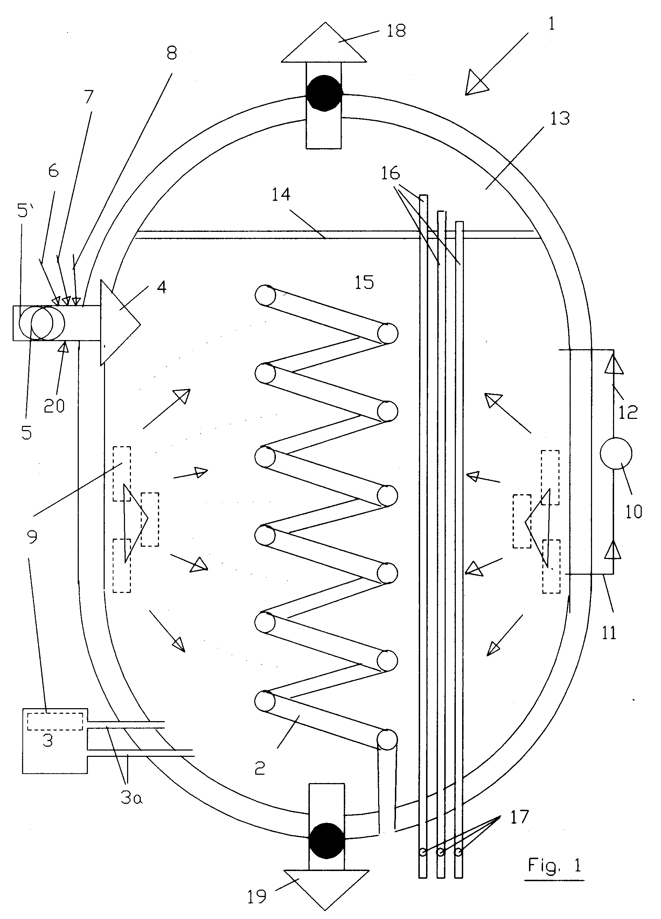

In Figur 1 ist mit 1 ein in einer Kläranlage anzutreffender, herkömmlicher Faulturm bzw. Faulbehälter von zylindrischer oder eiförmiger Gestalt bezeichnet. Dieser Faulturm 1 ist mit einer Rühreinrichtung 2 sowie einer Heizeinrichtung 3 versehen. Die Rühreinrichtung 2 kann sowohl ein Schraubenschaufler entsprechender Größe oder ein Blattschaufler oder jede andere Rühreinrichtung sein z.B. eine Gaseinpressung oder eine Umpumpung sein, solange sie den erfindungsgemäßen Zweck erfüllt. Die Heizeinrichtung 3 kann ein innen oder außen liegender Wärmetauscher 3 sein, der über Leitungen 3a die Temperatur im Faulturm 1 konstant hält oder erhöht, oder als Indirektheizung oder als Direktheizung durch Einblasen von Dampf ausgebildet sein.

Über eine Klärschlammzuführleitung 4 wird der Faulturm 1 mit kommunalen und/oder industriellen Klärschlämmen beschickt. In der Regel erfolgt diese Beschickung am Tage und die Beschikkung wird mit einer Einlaufmenge mit ca. 1/20 des Volumens des Faulbehälters 1 pro Tag durchgeführt. In die Klärschlammzuführleitung 4 ist eine Schnellrühr- und/oder Ultraschalleinrichtung 5 eingebracht, mit der die in den Faulturm 1 eingeleiteten Klärschlammengen mit einem Gehalt an ca.5% TS bzw. nach Eindickung auf maximal 14 % TS physikalisch bearbeitet werden. Als Schnellrühreinrichtung 5 kann ein Ultra-Turrax^{R} eingesetzt werden, der mit einer Umdrehung von 20 bis 30 x 10³ Upm betrieben wird, wobei zugleich auch diese Rühreinrichtung mit einer wirksamen Frequenz im unteren Schallbereich bis zum Ultraschall einstellbar ist, so daß in Abhängigkeit von dem zu bearbeitenden Klärschlamm zugleich auch eine angepaßte Ultraschallbehandlung stattfinden kann.

Zusätzlich kann eine Ultraschalleinrichtung 5' in der Klärschlammzuführleitung 4 enthalten sein, die mit oberhalb des menschlichen Hörbereichs liegenden Frequenzen, in der Regel mit Frequenzen von mehr als 20 kHz, zusätzlich zur Vorbehandlung des Klärschlammes dient, wobei zum einen celluläre Inhaltsstoffe des Klärschlammes, wie Bakterien und dergleichen, zusätzlich durch diese Ultraschallbehandlung zerstört werden und die darin enthaltenen Proteine freigesetzt und zugleich in gewissem Maße auch denaturiert werden. Wegen des relativ geringen Durchmessers der Klärschlammzuführleitung 4 und des damit verbundenen kleinen Raumes können überdies hohe Druckunterschiede erzeugt werden, die zu Misch- und Mahlvorgängen in dem durchgeleiteten Klärschlamm oder zu einer Dispergierung desselben führen. Unterstützend können Mahlmaßnahmen mit Rohr- oder Kugelmühlen zugeschaltet werden.

Aufgrund der vorgenommenen physikalischen Behandlung mittels Schnellrührer oder Ultraschall kommt es gleichzeitig auch zu einer Erhöhung der Temperatur des so behandelten Klärschlammes, so daß anfänglich die Heizeinrichtung 3 erst zur Steuerung und kontinuierlichen Aufrechterhaltung einer im wesentlichen konstanten Temperatur nach einigen Tagen eingesetzt werden muß.

Gemäß einer Ausführungsform der Erfindung kann der rohe Klärschlamm durch einen kurzfristigen thermophilen Vorschaltprozeß, z.B. mit Heizung bei Voreindickung, und daran sich anschließender mesophiler Phase, d.h. ohne Heizung, behandelt werden. Dabei wird in einer ersten Stufe die Versäuerung und Hydrolyse des Klärschlammes durchgeführt, an die sich die thermophile Phase und dann die mesophile Phase anschließt. Über Wärmetauscher 3 wird dabei freiwerdende Energie in die erste Stufe rückgeführt. Alternativ kann natürlich bei ausreichender Vorbehandlung, d.h. starker Verringerung der organischen Inhaltstoffe, auch schon die thermophile Phase ausreichend sein.

Über eine Zuführleitung 6 können dem physikalisch vorbehandeltem Klärschlamm kontinuierlich und/oder diskontinuierlich zusätzlich denaturierend wirkende Tenside zugesetzt werden, wie SDS oder dergleichen. In der Regel geschieht diese Zufuhr von denaturierend wirkenden Tensiden über einen Zeitraum von wenigen Stunden und unter Zufuhr von geringer Energie, um die verfahrensbedingte Eigenwärme über einen gewissen Zeitraum auf einem bestimmten Niveau zu halten, das in der Regel zwischen 30 und 40°C, insbesondere zwischen 33 und 37°C liegt.

Im Anschluß an die in den Faulturm eingeleiteten vorbehandelten Klärschlämme werden über eine Zuführleitung 7, in Abhängigkeit von den Gehalten an OTS im Klärschlamm, Enzyme in den Faulturm 1 eingeleitet, um die im Schlamm enthaltenen, physikalisch sowie chemisch vorbehandelten Fette und Fettsäuren, Proteine und proteinogenen Substanzen sowie Kohlenhydrate aber auch Carbonsäuren, welche in der OTS im wesentlichen in gleichen Mengen vorliegen, umzusetzen. Als Enzyme kommen die vorstehend beschriebenen Amylasen, Carbohydrasen, Carboanhydrasen, Proteinasen, Lipasen, Cellulasen und Glycoproteinasen zur Anwendung, wobei in der Regel handelsüblich erhältliche technische Enzyme in Mischung eingesetzt werden. Mit diesen Enzymen erfolgt ein weitergehender Abbau der makromolekularen organischen Inhaltsstoffe in dem Klärschlamm, so daß es zu einer starken Verringerung des Gehaltes an organischen Verbindungen kommt und somit extrem wenig Kohlenstoff auf der Deponie abgelagert wird.

Zur Aktivierung der Enzyme kann eine Einrichtung 9 zur Erzeugung von Ultraschall und/oder Mikrowellen vorgesehen sein, die in der Regel in der Heizeinrichtung 3 vorgesehen ist, natürlich aber auch innerhalb des Faulturms 1 als ringförmige Einrichtung 9 (gestrichelt eingezeichnet) am Umfang der Innenwand des Faulbehälters 1 eingebracht sein kann. Mit dieser Ultraschall oder Mikrowellen erzeugenden Einrichtung 9 erfolgt eine nachfolgende Energiezufuhr zur Aktivierung der Enzyme, wobei diese zugeführte Energie in der Regel erheblich niedriger liegt oder geringer ist als bei der physikalischen Vorbehandlung mittels schnell laufender Rührer oder Ultraschall.

Um insbesondere den Gehalt an toxischen Inhaltsstoffen im Klärschlamm zu verringern, kann erfindungsgemäß vorgesehen sein, anorganische und/oder organische Säuren in den Faulturm 1 einzubringen. Dies geschieht über eine in und/oder an die Klärschlammzuführleitung 4 angeschlossene Säurezuführeinrichtung 8. Über diese Zuführeinrichtung 8 können, zusätzlich zu den denaturierend wirkenden Tensiden, anorganische oder organische Säuren, insbesondere Ameisensäure oder Essigsäure zugesetzt werden, die ebenfalls der Denaturierung der makromolekularen organischen Inhaltsstoffe dienen, um sie einem späteren enzymatischen Angriff zugänglich zu machen bzw. die einer Nachsäuerung des Klärschlammes in dem Faulturm 1 dienen, damit der pH-Wert ein für die Enzyme und/oder des Enzymgemisches bestimmtes pH-Optimum nicht überschreitet, um deren Wirkung nicht negativ zu beeinflussen.

Zur Einstellung der optimalen Faulbedingungen ist gemäß der Erfindung am Faulturm 1 eine Durchflußmeßeinrichtung 10 vorgesehen, der über eine Zufuhrleitung 11 der Klärschlamm zugeführt wird, wobei kontinuierlich der pH-Wert, die Temperatur, die TS, die OTS, der CSB-Wert, die Säurezahl, der CCCP-Meßwert, die Gehalte an im Faulturm 1 gebildetem Ammoniak und Phosphor, die unter den Bedingungen in der wäßrigen Lösung als Ammoniak sowie als Ammonium- und Phosphationen vorliegen, sowie die weitere eventuell sich ergebende unterschiedliche Zusammensetzung bestimmt werden, so daß die erforderlichen Mengen an Zusatzstoffen eingestellt werden können, wobei der Klärschlamm nach der Messung über eine Leitung 12 wieder in den Faulturm 1 rückgeführt wird. Selbstverständlich kann diese Meßeinrichtung 10 an jeder anderen Stelle angeordnet sein, auch in dem Kreislauf der aussenliegenden Heizeinrichtung 3 eingebracht sein.

Zur Vermeidung einer zu starken Schaumbildung ist zwischen dem Gasphasenraum 13 und dem Klärschlammraum 15 des Faulturms 1 eine Schaumschneiderfalle 14 zur Verhinderung der Schaumbildung eingebracht. Zusätzlich enthält der Faulturm 1 unterschiedlich hoch angeordnete Ablaßpfeifen 16, zur Einstellung des Klärschlammniveaus und Volumenerhöhung oder -erniedrigung des Gasphasenraumes 13. Gleichzeitig dienen diese Ablaßpfeifen 16 der Entfernung von gegebenenfalls sich bildendem Schwimmschlamm, wozu die unteren Enden der Ablaßpfeifen 16 mit Ablaßventilen 17 versehen sind.

Am oberen Ende des Faulturmes 1 ist eine verschließbare Gasablaßöffnung 18 vorgesehen, über die gebildetes Faulgas abgelassen wird. Am unteren Ende des Faulturmes 1 oder jeder anderen beliebigen Stelle des Faulturmes 1 ist zur Abtrennung des Faulschlammes ein Auslauf 19 vorgesehen, über den nach einer Verweildauer von ca. 20 Tagen der Faulschlamm abgelassen wird.

Über eine Zuführeinrichtung 20 in der Klärschlammzuführleitung 4 werden dem Faulturm 1 Alkali-, Erdalkali- und Ammoniumverbindungen zugesetzt, die die Bildung schwer löslicher Phosphatverbindungen fördern, wobei die gebildeten Phosphatverbindungen ebenfalls über den Auslauf 19 abgeleitet werden.

Da durch die enzymatische Behandlung der organischen Trockensubstanz, insbesondere den Gehalten an stickstoffhaltigen Verbindungen, wie Proteinen oder dergleichen, in verstärktem Maße auch Ammoniak beim Abbau gebildet wird und der in höheren Konzentrationen für die Enzyme toxische Einfluß dieses Ammoniakes eintritt, können allein durch den Zusatz von leicht löslichen Magnesiumverbindungen schwer bis nicht lösliche Magnesiumammoniumphosphate und dergleichen gebildet werden. Auf diese Weise wird dem im Faulturm 1 befindlichen, mit dem erfindungsgemäßen Verfahren betriebenen Klärschlamm ein Teil des gebildeten Ammoniak entzogen, so daß der enzymatische Abbau im wesentlichen ungestörter verlaufen kann. Dieser Verlauf der Ammoniakbildung kann, wie bereits vorstehend ausgeführt, über die Durchflußmeßeinrichtung 10 kontinuierlich überwacht werden und somit die Zugabe der schwer löslichen Phosphatsalze bildenden Verbindungen kontinuierlich gesteuert werden.

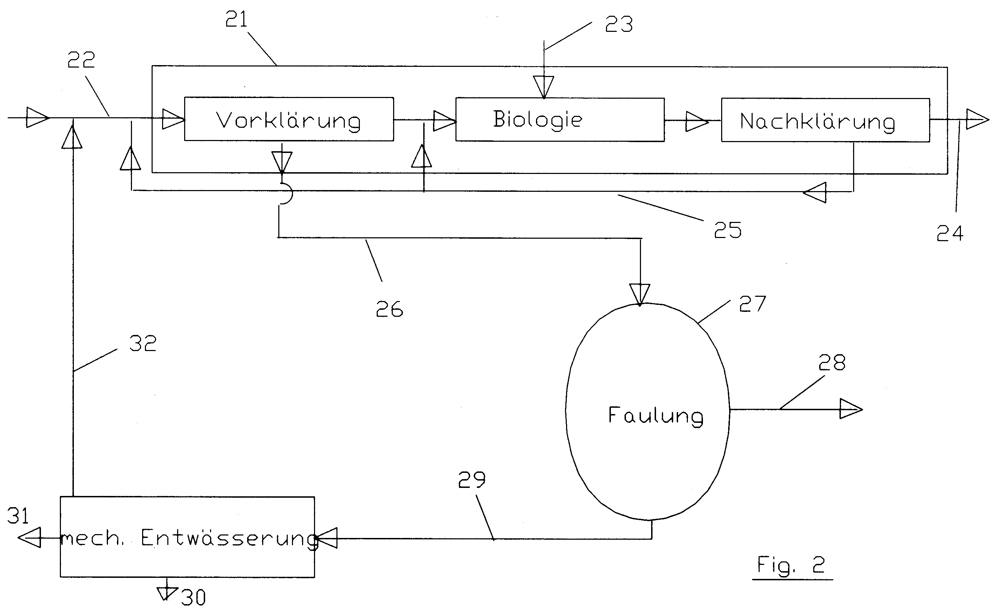

In Figur 2 ist schematisch das erfindungsgemäße Verfahren als Regelkreis noch einmal dargestellt, wobei mit 21 eine Kläranlage bestehend aus Vorklärung, Biologie und Nachklärung bezeichnet ist, der über eine Zuführleitung 22 kommunale und/oder industrielle Abwässer zugeführt werden. Über Zuführleitungen 23, wobei hier nur eine einzige Leitung schematisch gezeigt ist, werden Fe³⁺-, Al³⁺-, Ca²⁺-Salze zur Fällungsreinigung der in den Klärschlämmen in größeren Mengen vorliegenden Phosphate zugesetzt. Gereinigtes, von Schadstoffen befreites Klärwasser wird über einen Auslauf 24 aus der Kläranlage ausgeleitet. Noch mit Schadstoffen angereicherter Klärschlamm der Nachklärung wird je nach Schadstoffgehalt über Leitung 25 als Überschußschlamm in die Vorklärung oder als Rücklaufschlamm (Sekundärschlamm) in die Biologie eingeleitet.

Über eine Leitung 26 werden dann die in der Kläranlage mechanisch, chemisch und/oder biologisch behandelten Klärschlämme in den mit 27 bezeichneten Faulturm eingebracht, aus dem nach dem gemäß vorstehend unter Figur 1 beschriebenen Verfahren Faulgas über Leitung 28 abgelassen wird und der erhaltene kohlenstoffarme deponiefähige Klärschlamm mit einem Glühverlust von bis zu maximal 10 % über Leitung 29 zur mechanischen Entwässerung geleitet wird, von wo er über Leitungen 30 und 31 auf die Deponie ausgebracht oder gegebenenfalls einer nachfolgenden Trocknerbehandlung unterzogen werden kann. Das bei der mechanischen Entwässerung abgetrennte Schlammwasser wird dann über eine Leitung 32 in den Zulauf der Kläranlage rückgeführt.

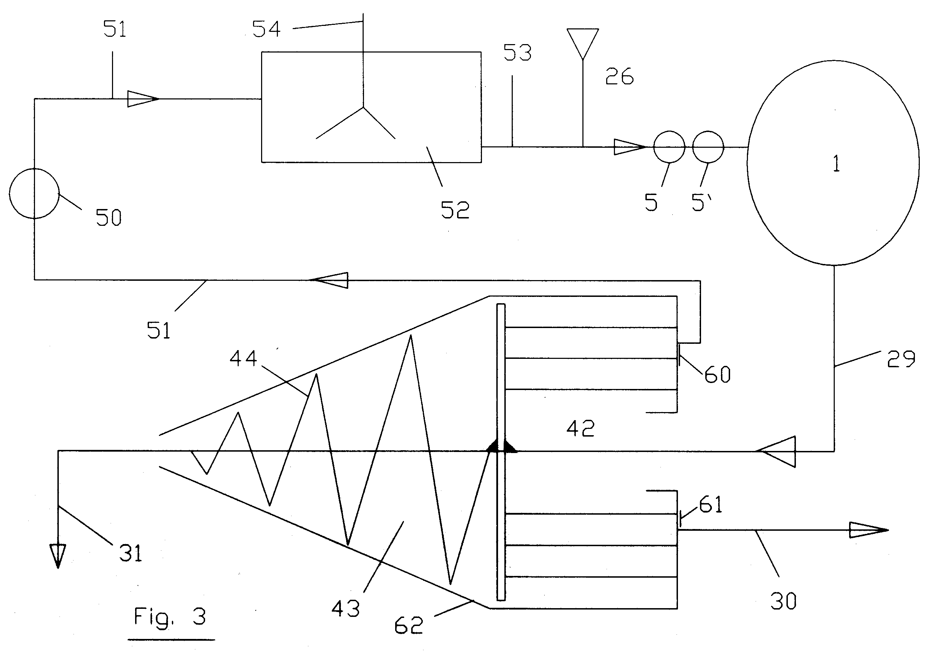

In Figur 3 ist ein 3-Phasen-Dekanter 40 dargestellt, in den der gefaulte Schlamm über die Leitung 29 aus dem Faulturm 1 eingegeben wird.

Der 3-Phasen-Dekanter 40 dient nicht nur der mechanischen Entwässerung, sondern darüber hinaus auch der Auftrennung der Feststoffphase in eine anorganische und organische Fraktion über das spezifische Gewicht, welches bei den anorganischen Bestandteilen höher liegt als bei den norganischen Feststoffen.

Der Faulschlamm wird in eine konzentrische Öffnung in der Stirnseite der Einlaßseite 42 einer schnellrotierenden Trommel 41 eingegeben.

Der Eingaberaum 42 der Trommel 41 ist durch eine mit der Schnecke 44 rotierende, radial zur Rotationsachse angeordnete Stauscheibe 45 von dem Auslaßraum 43, der sich konisch verjüngt abgetrennt.

Dabei sollte der Schlankheitsgrad des Dekanters, also das Verhältnis seines Durchmessers zu seiner Länge vom Einlass zum am weitesten entfernten Auslaß, mindestens 1:3, besser 1:4 betragen und der konische Teil möglichst flach ausgebildet sein.

Aufgrund der hohen Rotationsgeschwindigkeit der Trommel 41 wird im Eingaberaum 42 der Faulschlamm in eine schwer außen anliegende Fraktrion 47, eine mittlere Fraktion 48 und eine innere, ringförmige leichte Fraktion 49 aufgrund der Fliehkraft separiert. Bei der leichten Phase 49 handelt es sich um das Restwasser, welches so wenige feste Bestandteile aufweist, daß es direkt über einen stirnseitigen Anschluß im Eingaberaum 42 über eine Leitung 30 abgezogen und dem Auslauf der Kläranlage zugeführt werden kann.

Bei der schweren Fraktion 47 handelt es sich um den Feststoffanteil mit vorzugsweise anorganischen Bestandteilen, deren organischer Gehalt so gering ist, daß diese schwere Fraktion über die Leitung 31 auf der Auslaßseite 43 über die Schnecke 44 ausgetragen und deponiert werden kann

Zu diesem Zweck wird ständig wiederum nur der schwerste Bestandteil der schweren Fraktion 47, welcher sich in den äußersten Bereichen nahe der Innenwand der Trommel 41 befindet, den Umfangspalt 46 zwischen dem Umfang der Stauscheibe 45, die sehr scharfkantig ist und eine zusätzlich mechanisch zerstörenden Wirkung aufweist, hindurchgelangen, um im Auslaßraum von der Schnecke 43 ausgetragen zu werden.

Die mittlere Fraktion 48 besteht dagegen weitestgehend aus organischen Bestandteilen und wird über einen, vorzugsweise radialen Lage verstellbaren, Auslaß auf der Stirnseite des Einlaßraumes 42 über die Leitung 32 entnommen. Vorzugsweise erfolgt dabei die Rückführung in die Zulaufleitung 26 zum Faulturm, und zwar vor der Ultraschall-/Ultra-Turrax^{R}-Bahandlung 5 bzw. 5'.

Ebenso kann diese organische Fraktion auch einem separaten weiteren Faulraum zur speziellen Weiterbehandlung zugeführt werden.

Im Fall der Lösung gemäß Figur 3 wird im Verlauf der Rückführung diese organische Restfraktion zunächst wiederum einer energiereichen, harten Ultraschall-Behandlung in einem Ultraschall-Aggregat 50 unterworfen und anschließend - nach Versetzen mit Säuren oder Laugen über die Zufuhrleitung 51 - einem Verweilbehälter 52 zugeführt, in dem eine ständige Homogenisierung durch ein Rührwerk 54 während der Verweilzeit, die mehrere Stunden bzw. Tage dauern kann, gewährleistet ist. Zwischen dem Auslauf aus dem Verweilbehälter 52 und dem Beimischen in die Zufuhrleitung 26 für den Faulraum 1 wird über eine Leitung 53 eine Zugabe neutralisierender Stoffe durchgeführt.

## Patentansprüche

1. Verfahren zum Abbau von in Klärschlamm enthaltenen organischen Verbindungen,
**dadurch gekennzeichnet,** daß
a) der gegebenenfalls vorbehandelte Klärschlamm physikalisch behandelt und
b) der gegebenenfalls vorbehandelte Klärschlamm mit anorganischen und/oder organischen Verbindungen umgesetzt wird.

2. Verfahren nach Anspruch 1,
**dadurch gekennzeichnet**, daß
die physikalische Behandlung mittels schnell laufender Rührer und/oder Ultraschallbehandlung oder mit mechanischer Zerstörung durchgeführt wird.

3. Verfahren nach Anspruch 2,
**dadurch gekennzeichnet**, **daß**
die Ultraschallbehandlung in einer so energiereichen, harten Bestrahlung besteht, daß langkettige Verbindungen aufgebrochen bzw. die Zellmembranen organischer Bestandteile wenigstens teilweise aufgebrochen werden.

4. Verfahren nach Anspruch 1 oder 2,
**dadurch gekennzeichnet**, daß
die chemische Umsetzung mit denaturierenden Agentien, Enzymen, Säuren und/oder salzbildenden Verbindungen und/oder Laugen durchgeführt wird.

5. Verfahren nach einem der vorhergehenden Ansprüche,
**dadurch gekennzeichnet**, **daß**
während der chemischen Umsetzung eine Beaufschlagung des Klärschlammes mittels Ultraschall mit relativ geringer Energie erfolgt, so daß die bei der Umsetzung wirksamen Agentien, Enzyme oder Bakterien in ihrer Aktivität angeregt werden.

6. Verfahren nach Anspruch 3,
**dadurch gekennzeichnet**, daß
als Säuren anorganische und/oder organische Säuren sowie Aminosäuren und/oder deren Derivate und als salzbildende Verbindungen Erdalkaliverbindungen eingesetzt werden.

7. Verfahren nach einem der Ansprüche 1 bis 4,
**dadurch gekennzeichnet**, daß
aus dem Verfahren gewonnene Energie im Kreislauf geführt oder zum Betrieb von externen Antriebseinrichtungen verwendet wird.

8. Verfahren nach einem der vorhergehenden Ansprüche,
**dadurch gekennzeichnet**, **daß**
zur Entwässerung sowie Trennung der organischen von den anorganischen Bestandteilen des umgesetzten, gefaulten Klärschlammes ein sog. Drei-Phasen-Dekanter eingesetzt wird.

9. Verfahren nach Anspruch 8,
**dadurch gekennzeichnet**, **daß**
der Drei-Phasen-Dekanters wenigstens 2 radial verstellbare Wehre an Öffnungen aufweist, die auf unterschiedlichen Radien angeordnet sind.

10. Verfahren nach Anspruch 9,
**dadurch gekennzeichnet**, **daß**
der Drei-Phasen-Dekanter eine Stauscheibe aufweist und sich die Wehre auf der einlass-seitigen Stirnseite befinden.

11. Verfahren nach einem der vorhergehenden Ansprüche,
**dadurch gekennzeichnet, daß**
das bei der Entwässerung anfallende Restwasser direkt der Kläranlage wieder zur Reinigung zugeführt wird und die dem 3-Phasen-Dekanter entnommenen schweren, anorganischen Bestandteile deponiert werden können.

12. Verfahren nach einem der Ansprüche 8 bis 11,
**dadurch gekennzeichnet**, **daß**
die dem 3-Phasen-Dekanter entnommene mittelschwere Phase mit hohem organischen Anteil in den Prozeß zum Abbau des Klärschlammes rückgeführt wird.

13. Verfahren nach Anspruch 12,
**dadurch gekennzeichnet, daß**
die Rückführung vor der physikalische Behandlungsstufe des Klärschlammes erfolgt.

14. Verfahren nach einem der vorhergehenden Ansprüche,
**dadurch gekennzeichnet**, **daß**
in der Rückführung der mittleren Phase des 3-Phasen-Dekanters eine energiereiche Beaufschlagung mit Ultraschall oder ein mechanisches Zerstören der Verbindungsstrukturen erfolgt.

15. Verfahren nach einem der Ansprüche 8 bis 11,
**dadurch gekennzeichnet**, **daß**
die mittelschwere, OTS-reiche Phase aus dem 3-Phasen-Dekanter in einen separaten zweiten Faulturm geleitet und dort weiterbehandelt wird.

16. Verfahren nach einem der Ansprüche 8 bis 14,
**dadurch gekennzeichnet**, **daß**
der Schlamm vor Einbringen in den 3-Phasen-Dekanter konditioniert wird mit Hilfe von Kalk, und/oder Eisen- und/oder Aluminium-Ionen bzw. mit anionischen und kathionischen Polyelektrolyten.

17. Verfahren nach Anspruch 16,
**dadurch gekennzeichnet**, **daß**
erst die anorganischen Koagulanten, dann die organischen Koagulanten, dann die anionischen Polyelektrolyte und zuletzt die kathionischen Polyelektrolyte zugegeben werden.

18. Verfahren nach einem der vorhergehenden Ansprüche,
**dadurch gekennzeichnet**, **daß** das Vorbehandeln des Schlammes dadurch geschieht, daß
- Alkalien oder Erdalkalien zugegeben werden bis das Gemisch einen pH-Wert von mindestens 12 hat,
- anschließend das Gemisch einer Verweildauer von 3 Stunden bis 3 Tagen, vorzugsweise unterstützt durch Homogenisieren mittels eines Rührers etc., zur Membranbrechung unterworfen wird und,
- eine Neutralisation des Gemisches mittels Karbonsäuren, vorzugsweise Essigsäure oder Ameisensäure auf, etwa pH = 7 erfolgt.

19. Verfahren nach Anspruch 18,
**dadurch gekennzeichnet**, **daß**
als Alkalie Kalziumhydroxid verwendet wird.

20. Verfahren nach einem der vorhergehenden Ansprüche,
**dadurch gekennzeichnet**, **daß**
das Vorbehandeln des Schlammes dadurch geschieht, daß
- Säuren, vorzugsweise Karbonsäuren wie Essigsäure oder Ameisensäure, und so wenig wie möglich zusätzlicher Mineralsäure zugegeben werden bis das Gemisch einen pH-Wert von höchstens 2 hat,
- anschließend das Gemisch einer Verweildauer von 3 Stunden bis 3 Tagen vorzugsweise unterstützt durch Homogenisieren mittels eines Rührers ets. zur Membranbrechung unterworfen wird und
- eine Neutralisation des Gemisches mittels Kalk, Natronlauge oderKalilauge auf etwa pH = 7 erfolgt.

21. Verfahren nach einem der Ansprüche 16 bis 19,
**dadurch gekennzeichnet**, **daß**
dem Gemisch nach dem Neutralisieren und vor dem Einbringen in die chemische Umsetzung im Faulturm Peptone bzw. Peptine zugegeben werden.

22. Verfahren nach Anspruch 20,
**dadurch gekennzeichnet**, **daß**
100 g bis 1000 g Peptone bzw. Peptine pro t Feststoffgehalt zugegeben werden.
